Europäisches Patentamt

European Patent Office

Office européen des brevets

(11) Veröffentlichungsnummer: **0 284 135**
**A2**

(12) **EUROPÄISCHE PATENTANMELDUNG**

(21) Anmeldenummer: 88200447.6

(22) Anmeldetag: 09.03.88

(51) Int. Cl.⁴: **H01M 6/52** , C22B 7/00

(30) Priorität: 26.03.87 DE 3709967

(43) Veröffentlichungstag der Anmeldung:
28.09.88 Patentblatt 88/39

(84) Benannte Vertragsstaaten:
BE CH DE FR GB IT LI SE

(71) Anmelder: **METALLGESELLSCHAFT AG**
**Reuterweg 14 Postfach 3724**
**D-6000 Frankfurt/M.1(DE)**

(72) Erfinder: **Pietsch, Hartmut, Dr.**
**Feldbergstrasse 42**
**D-6380 Bad Homburg(DE)**
Erfinder: **Heng, Rudolf**
**Grünwiesenweg 21**
**D-6370 Oberursel(DE)**
Erfinder: **Koch, Walter**
**Dürerstrasse 7**
**D-6052 Mühlheim(DE)**

(54) **Verfahren zur Aufarbeitung von Klein-Batterien.**

(57) Durch mechanische Zertrümmerung der Klein-Batterien wird im wesentlichen nur die Metallumhüllung der Klein-Batterien aufgerissen. Das zertrümmerte Material wird unter Bewegung und unter nicht-oxidierenden Bedingungen bei 300 bis 600°C behandelt und aus dem Abgas das verflüchtigte Quecksilber gewonnen. Das Röstgut wird durch Siebung in eine grobe, eine mittlere und eine feine Fraktion getrennt und die grobe Fraktion als Eisen enthaltende Schrott-Fraktion abgeführt. Die mittlere Fraktion wird einer Magnetscheidung unterworfen und die magnetische Fraktion als Eisen enthaltende Schrott-Fraktion abgeführt. Die unmagnetische Fraktion wird mechanisch zerkleinert und gesiebt und die gröbere Fraktion als Messing enthaltende Schrott-Fraktion abgeführt. Die feinere Fraktion und die feine Fraktion werden zu einer wäßrigen Trübe mit einem pH-Wert von 7 bis 8 angerührt, die Trübe einer Naßmagnetscheidung unterworfen und die magnetische Fraktion als Eisen enthaltende Schrott-Fraktion abgeführt. Die unmagnetische Fraktion wird unter Bewegung und unter nicht-oxidierenden Bedingungen bei 1000 bis 1150°C behandelt und aus dem Abgas eine Zink enthaltende Fraktion abgeschieden und abgeführt. Der Rückstand wird als Mangan enthaltende Fraktion abgeführt.

EP 0 284 135 A2

## Verfahren zur Aufarbeitung von Klein-Batterien

Die Erfindung betrifft ein Verfahren zur Aufarbeitung von Klein-Batterien.

Unter dem Begriff "Klein-Batterien" werden alle Arten kleiner Batterien verstanden, wie sie z.B. für Radios, Taschenrechner, Taschenlampen, Uhren, Hörgeräte usw. verwendet werden. Ausgeschlossen sind große Akkus, wie sie z.B. für Autos verwendet werden.

Diese Batterien enthalten metallische Bestandteile, wie z.B. Fe, Ni, Cu, Zn, Ag, Cd, aber auch chemische Verbindungen, wie z.B. Salze des Mangans oder Zink. Darüber hinaus sind gewisse Anteile an Papier und Plastikstoffen enthalten.

Bis vor einiger Zeit wurden die verbrauchten Batterien ausschließlich mit normalem Hausmüll deponiert oder verbrannt. Dadurch treten jedoch Umweltverunreinigungen auf.

In neuerer Zeit werden diese Batterien gesondert gesammelt. Ihre Vernichtung in umweltfreundlicher Weise ergibt jedoch große Schwierigkeiten.

Aus der JP - A - 57-30273 ist ein Verfahren zur Aufarbeitung von Knopfbatterien bekannt, bei dem die Batterien zunächst einer thermischen Behandlung unterworfen werden, wobei Plastikstoffe und Gummi verbrannt werden, die negative Kappe gelöst und Quecksilber verdampft wird. Anschließend erfolgt eine Zerkleinerung in einer Schlagmühle, wie z.B. einer Hammermühle, wobei die negative Kappe von dem positiven Gehäuse entfernt wird. Die Wertmetalle aus dem Gehäuse werden durch magnetische Anziehung und Siebung abgetrennt. Die unmagnetischen Kappen werden nach der Absiebung nochmals einer Zerkleinerung unterworfen. Dieses Verfahren ist nur für reine Knopfbatterien zu verwenden.

Aus der DE - A - 3 402 196 ist ein Verfahren zur Aufarbeitung solcher Batterien bekannt, bei dem die Batterien mechanisch zertrümmert und dann chlorierend geröstet werden. Der Rückstand der chlorierenden Röstung wird mit verdünnte Salzsäure enthaltender wäßriger Lösung gelaugt, wobei die NE-Metalle weitgehend in Lösung gehen und danach mit metallischem Zink auszementiert werden. Die verbleibende Zn-haltige Lösung kann zur Herstellung von Zinksalzen verwendet werden. Mit diesem Verfahren ist eine Aufarbeitung ohne umweltschädliche Nebenprodukte möglich, jedoch erfordert die chlorierende Röstung einen gewissen Aufwand, der in manchen Fällen nicht erwünscht ist. Außerdem geht der säureunlösliche Eisengehalt des Röstgutes auf Deponie und somit verloren.

In der Patentanmeldung P 36 14 242 ist ein Verfahren beschrieben, bei dem beliebige Klein-Batterien zunächst mechanisch so zertrümmert werden, daß im wesentlichen nur die Metallumhüllung aufgerissen wird, das zertrümmerte Material in oxidierender Atmosphäre unter Bewegung be 500 bis 1000°C behandelt wird, wobei Quecksilber verflüchtigt und aus dem Abgas gewonnen wird und brennbare Bestandteile - wie Papier, Plastik und Graphit - verbrannt werden. Das Röstgut wird durch Siebung in eine grobe, eine mittlere und eine feine Fraktion getrennt und die grobe Fraktion als Eisen enthaltende Schrott-Fraktion abgeführt. Die mittlere Fraktion wird einer zweiten mechanischen Zertrümmerung unterworfen und in einer zweiten Siebung in eine Feinfraktion und eine gröbere Fraktion getrennt. Die gröbere Fraktion wird in einer dritten Stufe zerkleinert und in einer dritten Siebung in eine Feinfraktion und eine gröbere Fraktion getrennt. Die gröbere Fraktion wird durch Magnetscheidung in eine Messing enthaltende Schrott-Fraktion und eine Eisen enthaltende Fraktion getrennt. Die feinen Fraktionen werden in einer Sammelfraktion abgeführt, die Mangan, Zink und Silber enthält. Die Aufarbeitung der Sammelfraktion muß auf chemischem Wege erfolgen, wobei ein Rückstand von etwa 45 % der Aufgabe anfällt, der deponiert werden muß.

Der Erfindung liegt die Aufgabe zugrunde, den bei der Aufarbeitung von Klein-Batterien anfallenden Rückstand und die in ihm enthaltene Menge an Wertmetallen und umweltschädlichen Stoffen ohne chemische Behandlung möglichst kleinzuhalten, die Ansammlung der Wertmetalle in einzelnen Fraktionen möglichst hochzuhalten und die Aufarbeitung in möglichst wirtschaftlicher Weise durchzuführen.

Die Lösung dieser Aufgabe erfolgt erfindungsgemäß dadurch, daß

a) durch mechanische Zertrümmerung im wesentlichen nur die Metallumhüllung der Klein-Batterien aufgerissen wird,

b) das zertrümmerte Material unter Bewegung und unter nicht-oxidierenden Bedingungen bei 300 bis 600°C behandelt wird, und aus dem Abgas das verflüchtigte Quecksilber gewonnen wird,

c) das Röstgut aus (b) durch Siebung in eine grobe, eine mittlere und eine feine Fraktion getrennt wird, und die grobe Fraktion als Eisen enthaltende Schrott-Fraktion abgeführt wird,

d) die mittlere Fraktion einer Magnetscheidung unterworfen wird und die magnetische Fraktion als Eisen enthaltende Schrott-Fraktion abgeführt wird,

e) die unmagnetische Fraktion mechanisch zerkleinert und gesiebt wird und die gröbere Fraktion als Messing enthaltende Schrott-Fraktion abgeführt wird,

f) die feinere Fraktion aus (e) und die feine Fraktion aus (c) zu einer wäßrigen Trübe mit einem pH-Wert von 7 bis 8 angerührt werden, die Trübe einer Naßmagnetscheidung unterworfen wird, und die magnetische Fraktion als Eisen enthaltende Schrott-Fraktion abgeführt wird,

g) die unmagnetische Fraktion unter Bewegung und unter nicht-oxidierenden Bedingungen bei 1000 bis 1150°C behandelt wird und aus dem Abgas eine Zink enthaltende Fraktion abgeschieden und abgeführt wird, und

h) der Rückstand aus (g) als Mangan enthaltende Fraktion abgeführt wird.

Die mechanische Zertrümmerung erfolgt in der Weise, daß im wesentlichen nur die Metallumhüllung aufgerissen wird, wobei grobe Metallteile neben freigelegtem Batterieinhalt entstehen, jedoch das Eisen und die NE-Metalle, wie Kupfer und Zink, nicht miteinander verschmiedet werden. Besonders geeignet für diese Zertrümmerung ist eine Prallmühle, während bei einer weitgehenden Zerkleinerung in einer Hammermühle ein Verschmieden der Metalle eintreten würde. Die Röstung des zertrümmerten Materials erfolgt in der Weise, daß in Bezug auf das Eisen keine oxidierenden Bedingungen vorliegen. Die Röstung erfolgt vorzugsweise in einem Drehrohr, kann aber auch z.B. in einem Mehretagenofen erfolgen, in welchen heiße Rauchgase eingeleitet werden, die keinen oder nur geringe Mengen an freiem Sauerstoff enthalten. Das Abgas wird in eine Gasreinigung geleitet, wo auch das verflüchtigte Quecksilber abgeschieden wird. Pappe, Papier und Kunststoff werden verkokt und der verbleibende Kohlenstoff dient in der zweiten thermischen Behandlung als Reduktionsmittel. Die Siebschnitte bei der folgenden Siebung werden so gewählt, daß eine möglichst weitgehende Anreicherung der Wertstoffe in den einzelnen Fraktionen erfolgt. Die grobe, Eisen enthaltende Schrott-Fraktion kann direkt einem Verfahren zur Eisenherstellung zugeführt werden. Die magnetische Fraktion nach der Magnetscheidung der mittleren Fraktion besteht zum größten Teil ebenfalls aus Eisen, jedoch ist der Gehalt geringer als in der groben Fraktion und der Anteil an NE-Metallen höher. Diese Fraktion kann ebenfalls der Eisenherstellung zugeführt werden oder problemlos deponiert werden, da sie praktisch keine Schadstoffe enthält. Die Zerkleinerung der unmagnetischen Fraktion und die anschließende Siebung werden so durchgeführt, daß ein möglichst großer Teil des Kupfergehaltes in der gröberen Fraktion anfällt und diese Fraktion direkt einer Weiterverarbeitung zugeführt werden kann. Vorzugsweise erfolgt diese Zerkleinerung in einer Stabmühle. Die feinere Fraktion besteht überwiegend aus Graphit, Kohlenstoff, Papier, Pappe und Kunststoff. Sie wird mit der feinen Fraktion von der Siebung nach der Röstung vereinigt und mit Wasser angerührt. Der pH-Wert in der Trübe wird durch Zugabe von Soda auf 7 bis 8 eingestellt, da sonst ein Teil des Mangans gelöst würde. Bei der anschließenden Naßmagnetscheidung wird ein Großteil des metallischen Eisens als Eisen enthaltende Schrott-Fraktion abgetrennt. Für diese Fraktion treffen die Ausführungen zu der magnetischen Fraktion der trockenen Magnetscheidung ebenfalls zu. Bei der Herstellung der Trübe gehen die im Feststoff enthaltenen Cl-und K-Ionen in Lösung. Der Feststoffgehalt der magnetischen und der unmagnetischen Fraktion wird aus den Lösungen abgetrennt. Die thermische Behandlung der unmagnetischen Fraktion erfolgt vorzugsweise in einem Drehrohrofen, der nach dem Wälzverfahren betrieben wird, wobei der aus der ersten thermischen Behandlung resultierende Kohlenstoffgehalt als Reduktionsmittel dient. Der aus dem Abgas abgeschiedene Staub besteht überwiegend aus Zink und kann in einer Zinkgewinnung eingesetzt werden. Der aus dem Ofen ausgetragene Rückstand besteht überwiegend aus Mangan und kann z.B. in der Eisenhüttenindustrie verwertet werden.

Eine vorzugsweise Ausgestaltung besteht darin, daß die Behandlung gemäß (g) bei 1070 bis 1130°C erfolgt. Dadurch wird eine besonders gute Trennung der Bestandteile der Charge erzielt.

Eine vorzugsweise Ausgestaltung besteht darin, daß die Absiebung der feinen Fraktion gemäß (c) in einer Korngröße bis zu 2 mm erfolgt, und die Absiebung der mittleren Fraktion in einer Korngröße bis zu 15 mm erfolgt. Dadurch wird eine gute Anreicherung der Wertmetalle in den Fraktionen erzielt.

Eine vorzugsweise Ausgestaltung besteht darin, daß die Absiebung bei 1 mm und 10 mm erfolgt. Dadurch wird in den meisten Fällen eine besonders gute Anreicherung der Wertmetalle in den Fraktionen erzielt.

Eine vorzugsweise Ausgestaltung besteht darin, daß die mechanische Zerkleinerung gemäß (e) so erfolgt, daß die nicht-metallischen Bestandteile weitgehend auf eine Korngröße unter 1 mm aufgemahlen sind, und die Siebung gemäß (e) bei 1 mm durchgeführt wird. Dadurch wird eine hohe Anreicherung des Kupfergehaltes in der Messingfraktion erzielt.

Eine vorzugsweise Ausgestaltung besteht darin, daß die Trübe gemäß (f) auf einen Feststoffgehalt von 25 bis 35 % eingestellt wird. Dadurch eine eine gute Trennung bei der Naßmagnetscheidung erzielt und eine gute Lösung von Chlor-und Kaliumionen.

Eine vorzugsweise Ausgestaltung besteht darin, daß die bei der Naßmagnetscheidung gemäß (f) anfallenden Fraktionen filtriert werden. Durch Filtration wird der Wassergehalt der Feststoff-Fraktionen sehr stark verringert.

Eine vorzugsweise Ausgestaltung besteht darin, daß die anfallenden Filtrate der Abgasreinigung gemäß (b) und/oder gemäß (g) zugeführt werden. Dadurch können die Filtrate in einfacher Weise aufgearbeitet werden.

Eine vorzugsweise Ausgestaltung besteht darin, daß die thermische Behandlung gemäß (b) und (g) in Drehrohröfen erfolgt. Drehrohröfen sind besonders gut geeignet für die thermischen Behandlungen.

Die Erfindung wird anhand eines Beispiels näher erläutert.

In den Tabellen sind die Spalten wie folgt bezeichnet:

1 = Aufgabe in die Prallmühle

2 = Eisen enthaltende Schrott-Fraktion nach Siebung des Röstgutes

3 = Eisen enthaltende Schrott-Fraktion nach Magnetscheidung der mittleren Fraktion

4 = Messing enthaltende Schrott-Fraktion nach Zerkleinerung und Absiebung als gröbere Fraktion

5 = unmagnetische Fraktion nach Zerkleinerung und Magnetscheidung als feinere Fraktion und feine Fraktion des Röstgutes

6 = magnetische Fraktion nach Naßmagnetscheidung

7 = unmagnetische Fraktion nach Naßmagnetscheidung

8 = Mangan enthaltender Rückstand der zweiten thermischen Behandlung

9 = Zink enthaltende Fraktion nach Abscheidung aus Abgas der zweiten thermischen Behandlung

10 = Staub aus Abgas der ersten thermischen Behandlung

11 = in der Trübe in Lösung gegangen

Die erste thermische Behandlung erfolgte in einem Drehrohrofen bei 500°C und die zweite in einem Wälzofen bei 1100°C. Der Feststoffgehalt in der Trübe betrug 30 % und der pH-Wert war 8.

| | 1 | 2 | 3 | 4 | 5 |
|---|---|---|---|---|---|
| % von der Aufgabe | 100 | 17 | 4,8 | 1,5 | 58,3 |
| Körnung mm | 0 - 80 | >10 | 1-10 | 1 - 10 | <1 |
| Fe-ges.[%] | 19,3 | 87,1 | 50,7 | 0,26 | 5,9 |
| Mn [%] | 15,3 | 0,47 | 8,2 | 0,95 | 25,1 |
| Zn [%] | 17,45 | 1,16 | 11,8 | 51,95 | 25,4 |
| Cu [%] | 0,55 | 0,03 | 0,9 | 31,1 | 0,06 |
| Ag [g/t] | 138 | <5 | <5 | 5 | <5 |
| Hg [g/t] | 1 900 | 9 | 22 | 27 | 40 |
| K [%] | 1,0 | Spuren | Spuren | Spuren | 1,7 |
| Cr [%] | 0,01 | 0,07 | Spuren | Spuren | 0,13 |
| Ni [%] | 0,05 | 0,05 | 0,7 | 0,7 | 0,26 |
| Cd [%] | 0,008 | Spuren | 0,07 | 0,3 | 0,04 |
| Pb [%] | <0,05 | 0,04 | 0,08 | 0,3 | <0,05 |
| Cl [%] | 4,1 | n.b. | n.b. | Spuren | 6,4 |
| C-ges. [%] | 11,6 | n.b. | n.b. | n.b. | 12,1 |
| S-ges. [%] | 0,1 | n.b. | n.b. | n.b. | 0,2 |

| | 6 | 7 | 8 | 9 | 10 | 11 |
|---|---|---|---|---|---|---|
| % von der Aufgabe | 4,8 | 48,9 | 21,3 | 27,6 | 18,4 | 4,6 |
| Körnung mm | < 1 | < 1 | <1 | < 1 | < 1 | |
| Fe-ges.[%] | 41,3 | 3,0 | 6,7 | 1,1 | 4,2 | |
| Mn [%] | 12,3 | 28,7 | 65,9 | 3,6 | 17,1 | |
| Zn [%] | 12,9 | 30,3 | 1,5 | 65,6 | 16.3 | |
| Cu [%] | < 0,05 | 0,07 | 0,07 | 0,1 | 0,07 | |
| Ag [g/t] | < 5 | < 5 | <5 | 8 | <5 | |
| Hg [g/t] | 26 | 55 | 0,3 | 256 | 15,9% | |
| K [%] | < 0,05 | < 0,05 | <0,05 | < 0,05 | 0,37 | 7,3 g/l |
| Cr [%] | 0,4 | 0,06 | 0,2 | 0,05 | 0,56 | |
| Ni [%] | 1,4 | 0,1 | 0,32 | 0,09 | 0,42 | |
| Cd [%] | 0,25 | 0,02 | 0,001 | < 0,05 | 0,27 | |
| Pb [%] | 0,1 | 0,08 | <0,05 | < 0,05 | <0,05 | |
| Cl [%] | 0,5 | 0,39 | 0,09 | 0,2 | 3,9 | 25,3 g/l |
| C-ges. [%] | 6,0 | 13,9 | 0,06 | 2,6 | 14,8 | |
| S-ges. [%] | 0,2 | 0,21 | 0,06 | 0,14 | 0,21 | |

Die Vorteile der Erfindung bestehen darin, daß Klein-Batterien in wirtschaftlicher Weise praktisch ohne Rückstand oder mit geringen Rückständen aufgearbeitet werden können, die gefahrlos deponiert werden können, da sie praktisch keine Schadstoffe enthalten. Die Verarbeitung kann ohne chemische Behandlung und dabei anfallende Lösungen erfolgen, und die Wertmetalle können weitgehend wiedergewonnen werden.

**Ansprüche**

1. Verfahren zur Aufarbeitung von Klein-Batterien, dadurch gekennzeichnet, daß

a) durch mechanische Zertrümmerung im wesentlichen nur die Metallumhüllung der Klein-Batterien aufgerissen wird,

b) das zertrümmerte Material unter Bewegung und unter nicht-oxidierenden Bedingungen bei 300 bis 600°C behandelt wird, und aus dem Abgas das verflüchtigte Quecksilber gewonnen wird,

c) das Röstgut aus (b) durch Siebung in eine grobe, eine mittlere und eine feine Fraktion getrennt wird, und die grobe Fraktion als Eisen enthaltende Schrott-Fraktion abgeführt wird,

d) die mittlere Fraktion einer Magnetscheidung unterworfen wird und die magnetische Fraktion als Eisen enthaltende Schrott-Fraktion abgeführt wird,

e) die unmagnetische Fraktion mechanisch zerkleinert und gesiebt wird und die gröbere Fraktion als Messing enthaltende Schrott-Fraktion abgeführt wird,

f) die feinere Fraktion aus (e) und die feine Fraktion aus (c) zu einer wäßrigen Trübe mit einem pH-Wert von 7 bis 8 angerührt werden, die Trübe einer Naßmagnetscheidung unterworfen wird, und die magnetische Fraktion als Eisen enthaltende Schrott-Fraktion abgeführt wird,

g) die unmagnetische Fraktion unter Bewegung und unter nicht-oxidierenden Bedingungen bei 1000 bis 1150°C behandelt wird und aus dem Abgas eine Zink enthaltende Fraktion abgeschieden und abgeführt wird, und

h) der Rückstand aus (g) als Mangan enthaltende Fraktion abgeführt wird.

2. Verfahren nach Anspruch 1, dadurch gekennzeichnet, daß die Behandlung gemäß (g) bei 1070 bis 1130°C erfolgt.

3. Verfahren nach Anspruch 1 oder 2, dadurch gekennzeichnet, daß die Absiebung der feinen Fraktion gemäß (c) in einer Korngröße bis zu 2 mm erfolgt, und die Absiebung der mittleren Fraktion in einer Korngröße bis zu 15 mm erfolgt.

4. Verfahren nach Anspruch 3, dadurch gekennzeichnet, daß die Absiebung bei 1 mm und 10 mm erfolgt.

5. Verfahren nach einem der Ansprüche 1 bis 4, dadurch gekennzeichnet, daß die mechanische Zerkleinerung gemäß (e) so erfolgt, daß die nicht-metallischen Bestandteile weitgehend auf eine Korngröße unter 1 mm aufgemahlen sind, und die Siebung gemäß (e) bei 1 mm durchgeführt wird.

6. Verfahren nach einem der Ansprüche 1 bis 5, dadurch gekennzeichnet, daß die Trübe gemäß (f) auf einen Feststoffgehalt von 25 bis 35 % eingestellt wird.

7. Verfahren nach einem der Ansprüche 1 bis 6, dadurch gekennzeichnet, daß die bei der Naßmagnetscheidung gemäß (f) anfallenden Fraktionen filtriert werden.

8. Verfahren nach Anspruch 7, dadurch gekennzeichnet, daß die anfallenden Filtrate der Abgasreinigung gemäß (b) und/oder gemäß (g) zugeführt werden.

9. Verfahren nach einem der Ansprüche 1 bis 8, dadurch gekennzeichnet, daß die thermische Behandlung gemäß (b) und (g) in Drehrohröfen erfolgt.